# EUROPEAN PATENT SPECIFICATION

(11) **EP 2 058 563 B1**
(45) Date of publication and mention of the grant of the patent: **28.07.2010**
(21) Application number: 07425697.5
(22) Date of filing: 06.11.2007
(51) Int. Cl.: F16J 15/00, F16J 15/32

(54) **Seal assembly for a rotating member**
Dichtungsanordnung für ein Drehglied
Ensemble d'étanchéité pour élément rotatif

(43) Date of publication of application: 13.05.2009
(73) Proprietor: CORCOS INDUSTRIALE S.a.s. di Externa Italia S.r.l., Pinerolo (TO) (IT)
(72) Inventor: Buro, Maurizio, 10064 Pinerolo (IT); Vignolo, Francesco, 10060 Bibiana (IT)
(74) Representative: D'Angelo, Fabio

(56) References cited:
- EP-A- 1 586 799
- EP-A- 1 795 787
- US-A- 4 522 411
- US-A- 4 596 394

## Description

The present invention relates to a seal assembly for a rotating member, in particular for a shaft of a vehicle engine, to which the following description specifically refers but without any loss of generality.

In the field of mechanical design, there is a need to reduce friction by lubricating the rotating members in an oil bath. In many applications some portions of the rotating members need to be immersed in an oil bath while other adjacent portions thereof work in a sealed, oil-free environment. In order to satisfy this need, seal assemblies are known, as described for example in patent EP-B-1586799, which are housed inside the gap defined between a normally fixed, hollow casing, and a rotating member housed therein. During the rotation of the rotating member, said assemblies seal said gap in order to prevent oil flowing into the dry environment.

In particular, said seal assemblies are axially symmetrical with respect to the axis of the rotating member to which they are fitted and essentially consist of a radially inner ring that is made of metal and fitted to the rotating member, a radially outer ring, also made of metal and fitted to the casing, and a sealing member made of elastically deformable polymeric material; interposed between said rings.

More specifically, the elastomeric member is attached to the outer ring and has a lip on the side facing the oil bath, said lip being suitable to create a contact seal with a relative mating portion of the inner ring.

To limit the drawback typical of contact seals, namely the rapid wear of the elastomeric material in use in the area of cooperation with the metal ring, the sealing lip is provided with a spiral groove, which fulfils two purposes:
- it achieves a sealing effect simply by creating a surface contact between the elastomeric lip and the inner ring, without the former having to penetrate the latter; and
- as the inner ring rotates integrally with the rotating member, it generates a fluid-dynamic "plumping" effect on the air between the sealing lip and said inner ring, which forces the oil towards the oil environment and enhances sealing performance.

While the solution described above is extremely advantageous with respect to other known solutions in terms of wear and functionality of the seal assembly when the rotating member is used, it is however capable of further improvement.

In particular, it has been observed that seal assemblies of the type described above cannot guarantee perfect sealing of the dry environment when the rotating member is stopped and is arranged on a slope with respect to the horizontal or whenever, with the rotating member stopped, the oil level is above the half-way mark on said rotating member.

In the above condition, part of the seal assembly could be in the oil bath and, in static conditions, the sealing lip provided with the spiral groove is not able to guarantee the same sealing effect that is generated in dynamic conditions, i.e. with the support of the fluid-dynamic pumping action that pushes the oil towards the oil environment.

The above condition could occur for example when the vehicle on which the rotating member is mounted is parked on a slope or when said rotating member is installed at an oblique angle on said vehicle.

US 4,596,394 discloses a seal assembly as defined in the preamble of claim 1.

The object of the present invention is to produce a seal assembly for a rotating member, which overcomes the drawback associated with the seal assemblies that are known and described above.

This object is achieved by the present invention, which relates to a seal assembly as claimed in claim 1.

In order to better understand the present invention, a non-limiting preferred embodiment thereof will now be described by way of example with reference to the accompanying drawings, in which:
- figure 1 shows an axial section of a seal assembly for a rotating member, according to the present invention;
- figure 2 shows an axial half-section on an enlarged scale of the seal assembly in figure 1; and
- figure 3 shows a section similar to that in figure 1 with reference to a vehicle application, in which the rotating member and the seal assembly according to the invention are shown in a sloping position with respect to the horizontal and partially in an oil bath in a static condition.

In the attached drawings, number 1 indicates, as a whole, a seal assembly housed in the gap 2 defined between a hollow casing 3 with axis A and a rotating member, for example a shaft 4 of a vehicle, housed coaxially inside said casing 3. On axially opposite sides of the seal assembly 1, the gap 2 comprises an environment 5 for containing a lubricating oil bath, and an environment 6 into which the oil must not be allowed to flow and which, in use, contains air.

The seal assembly 1 comprises a radially inner ring 7 integral with the shaft 4, a radially outer ring 8 integral with the casing 3 and an elastomeric member 9 interposed between the rings 7 and 8 and attached to said ring 8.

The inner ring 7 comprises an axial portion 10 pressed in a fluid-tight manner onto the shaft 4, and from the opposite ends of which respective radial portions 11, 12 project inside the gap 2. One of the radial portions (11) faces the environment 5 and extends almost up to the casing 3, while the other (12) faces the environment 6 and extends for a much shorter distance than the radial portion 11.

The outer ring 8 comprises an axial portion 13 from the end of which facing the environment 6 a contoured portion 14 projects towards the axial portion 10 of the inner ring 7.

The axial portion 13 is partially fitted in a fluid-tight manner to the casing 3 and partly defines, by means of a shoulder 15, with said casing 3, a seat 16 for housing part of the elastomeric member 9, as described in more detail later on in this document.

As shown in the attached drawings, the axial portion 13 of the outer ring 8 extends facing the axial portion 10 of the inner ring 7.

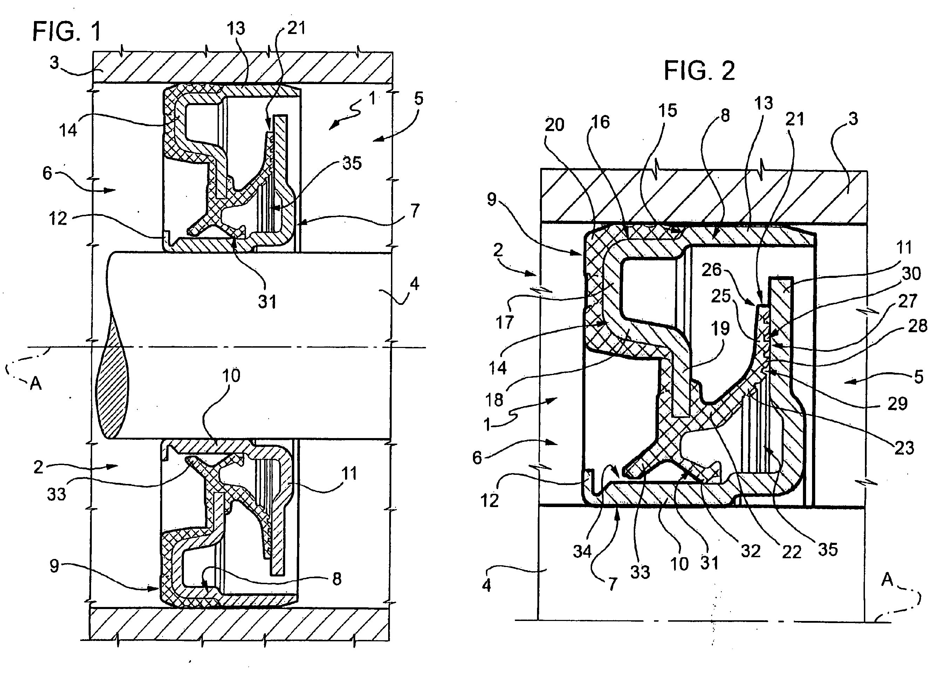

With particular reference to figure 2, starting from the axial portion 13, the contoured portion 14 comprises a radial section 17 extending towards the shaft 4 and approximately along the extension of the radial portion 12, a substantially axial section 18 extending towards the environment 5 and a radial section 19 defining a free end of the outer ring 8.

The elastomeric member 9 essentially comprises a contoured portion 20 fitted to the surface of the portion 14 of the outer ring 8 facing the environment 6 and anchored to said portion 14, and a sealing lip 21, projecting in a cantilevered manner from the contoured portion 20 and cooperating with the radial portion 11 of the inner ring 7.

In particular, the contoured portion 20 cooperates with the sections 17, 18 and 19 of the portion 14 of the outer ring 8, has a free end that engages with the seat 16 of said outer ring 8 and is anchored, on the opposite end, to the free end of the section 19.

The sealing lip 21 (figure 2) extends from the end of the contoured portion 20 anchored to the section 19 of the outer ring 8 and comprises, in succession towards its free end, an axial portion 22, an oblique portion 23, sloping towards the casing 3, and a radial portion 25 cooperating in a fluid-tight manner with the radial portion 11 of the inner ring 7.

The sealing lip 21 tapers in section towards its free end and is delimited by two surfaces 26, 27, respectively facing the portion 14 of the outer ring 8 and the portion 11 of the inner ring 7.

The surface 27 of the lip 21 is provided with a plurality of alternating, equally spaced solid elements 28 and hollow elements 29, conferring a serrated appearance to said surface.

The solid elements 28 of the surface 27 define, in correspondence with the outside edge thereof, respective sealing edges that cooperate with the radial portion 11 of the inner ring 7.

The equally spaced hollow elements 29 of the surface 27 are defined by a spiral groove 30 having a constant pitch and constant depth suitable to produce, during the rotation of the rotating member 4, a fluid-dynamic pumping action on the air from the environment 6 to the environment 5 so as to push any oil particles in the sealing area towards said environment 5, as described in detail later on in this document.

Advantageously, the elastomeric member 9 comprises an additional static sealing lip 31 that extends towards the axial portion 10 of the inner ring 7 starting from the end of the contoured portion 20 anchored to the section 19 of the outer ring 8; the lip 31 being able to assume a configuration in which it forms a contact seal (attached drawings) with the axial portion 10 of the inner ring 7, when the rotating member 4 is stopped, and a configuration in which it is detached (not illustrated) from said axial portion 10, during the rotation of the rotating member 4 and due to the effect of the depression created by the air flow along the groove 30 as a result of said rotation. In practice, without any external action, the lip 31 is spring loaded towards the configuration in which it forms a contact seal with the axial portion 10 of the inner ring 7 and is detached from said portion due to the fluid-dynamic pumping effect generated by the groove 30 on the air inside said groove when the shaft 4 is made to rotate.

As shown in figures 1 and 2, the area of cooperation between the sealing lip 31 and the inner ring 7 is axially interposed between the environment 6 and the area of cooperation by the sealing lip 21 with said inner ring 7.

The sealing lip 31 has a truncated conical shape with axis A and decreases in section towards the environment 5 and towards the area of cooperation with the axial portion 10 of the inner ring 7.

According to a preferred embodiment of the present invention, the sealing lip 31 is also provided, radially inwards, with an annular projection 32, in correspondence with which it cooperates with the axial portion 10 of the inner ring 7.

The elastomeric member 9 comprises a truncated conical appendix 33 with axis A, the tapered end of which is opposite that of the lip 31 and extends towards the inner ring 7 starting from the end of the contoured portion 20 anchored to the section 19 of the outer ring 8. The appendix 33 delimits, with the inner ring 7, an opening 34 of a suitable size to permit the flow of air, in all conditions, while also defining a filter for any foreign particles.

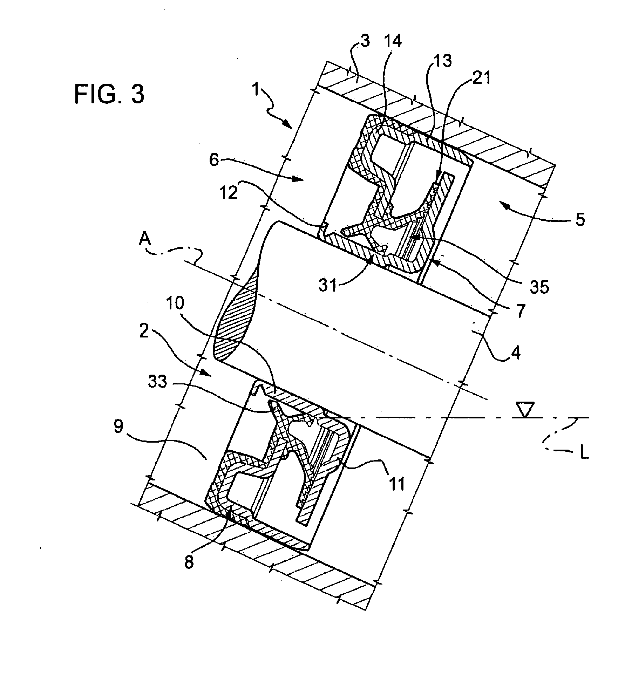

In use, when the vehicle is parked, i.e. the shaft 4 is stopped, the lip 31 is arranged in the configuration in which it forms a contact seal with the axial portion 10 of the inner ring 7. Also when the shaft 4 and the seal assembly 1 are on a slope with respect to the horizontal (figure 3), any oil (the free surface of which is indicated by the letter L) coming from the environment 5 that flows past the seal provided by the lip 21 (only optimal during the rotation of said shaft 4) would not reach the environment 6 in any case, due to the sealing effect provided by the additional lip 31.

When the shaft 4 is made to rotate, i.e. when the engine of the vehicle is started, the oil contained in the annular chamber 35, delimited between the inner ring 7 and the lips 21 and 31, is pumped out of said chamber 35 again thanks to the combined action of the centrifugal force and the fluid-dynamic pumping effect generated by the spiral groove 30 of said lip 21.

Moreover, in this situation a depression effect is produced in the chamber 35, with the subsequent detachment of the lip 31 from the axial portion 10 of the inner ring 7.

At this point, the air can enter the chamber 35 axially from the environment 6, through the opening 34 and the gap formed between the lip 31 and the axial portion 10; said air is pushed towards the environment 5 due to said fluid-dynamic pumping effect generated by the groove 30, producing a similar thrust effect on the oil particles in the sealing area, which are thus prevented from flowing into the environment 6.

It is important to note that thanks to the opening 34 and the gap between the lip 31 and the axial portion 10 of the inner ring 7 there is a narrowing of the section along the air flow in the chamber 35, which causes an acceleration of said air flow towards the lip 21.

The advantages that can be achieved with the seal assembly 1 produced according to the present invention are apparent from an examination of the characteristics thereof.

In particular, with the shaft 4 stopped, the additional lip 31 guarantees the sealing of the gap 2 even if the shaft 4 is arranged at an oblique angle with respect to the horizontal, so that the seal assembly 1 is partially in the oil bath.

Moreover, the lip 31 does not obstruct the air flow from the environment 6 to the environment 5 when the shaft 4 is rotating; in said condition, the lip 31 is immediately pushed into the configuration in which it is detached from the inner ring 7 as a result of the depression created in the chamber 35 due to the fluid-dynamic pumping effect of the spiral groove 30.

Moreover, the inclusion of the lip 31 in seal assemblies 1 installed in internal combustion engines enables said engines to pass the pneumatic test in the cold condition, to verify the correct installation of the various components, without requiring any additional operations.

As is known, said test essentially consists of blocking the engine outlets and introducing pressurized air into said engine in order to check for any pressure drops. Without the lip 31, the test can only be passed by placing sealing additives on the groove 30 of the lip 21, such as gel or wax products.

Finally, the presence of the projecting member 32 guarantees the spring return of the lip 31 into the position in which it forms a contact seal with the axial portion 10 of the inner ring 7 when the shaft 4 is stopped.

Lastly, it is clear that modifications and variations may be made to the seal assembly 1 described and illustrated herein without departing from the scope of the present invention as set forth in the appended claims.

In particular, the elastomeric member 9 could consist of several separate elements fitted to the outer ring 8.

## Claims

1. Seal assembly (1) to seal the gap (2) between a rotating member (4) and a fixed member (3) housing said rotating member (4), to prevent the flow of oil from a first environment (5) to a second environment (6) arranged on opposite sides of said gap (2), said seal assembly (1) comprising:
- a first ring (7) fittable to said rotating member (4);
- a second ring (8) fittable to said fixed member (3);
- elastically deformable sealing means (9) attached to said second ring (8) and comprising at least a first lip (21) suitable to cooperate in a fluid-tight manner with a first mating portion (11) of said first ring (7);and
- a groove (30) provided in the area of cooperation between said first lip (21) and said first mating portion (11) to generate, during the rotation of said rotating member (4), a fluid-dynamic pumping effect that pushes the oil away from the sealing area towards the first environment (5); said fluid-dynamic effect being obtained by generating an air flow from said second environment (6) to said first environment (5) by means of said groove (30) and due to said rotation of said rotating member (4);
wherein said sealing means (9) comprise a second lip (33) to permit the air flow in all conditions, while also defining a filter for any foreign particles;
**characterized in that** said groove (30) is a spiral groove, **in that** said second lip (33) delimits, with said first ring (7), an opening (34) of a predetermined size, and **in that** said sealing means (9) comprise a third lip (31) axially interposed between said first and second lip (21, 33) and suitable to cooperate with a second mating portion (10) of said first ring (7), axially interposed between said first mating portion (11) and said second environment (6); said third lip (31) being disposed in a configuration in which it forms a contact oil seal with said second mating portion (10) when said rotating member (4) is stopped, and can be detached from said second mating portion (10) due to the fluid-dynamic pumping effect generated by the groove (30) on the air inside said groove (30) when said rotating member (4) is made to rotate.

2. Seal assembly according to claim 1, **characterized in that** the area of cooperation between said first lip (21) and said first mating portion (11) extends radially with respect to the axis (A) of rotation of said rotating member (4).

3. Seal assembly according to claim 1 or 2, **characterized in that** the area of cooperation between said third lip (31) and said second mating portion (10) extends axially with respect to the axis (A) of rotation of said rotating member (4).

4. Seal assembly according to any of the previous claims, **characterized in that** said third lip (31) has a truncated conical shape coaxial with the axis (A) of rotation of said rotating member (4) and decreases in section towards said first environment (5) and towards the area of cooperation with said second mating portion (10).

5. Seal assembly according to claim 4, **characterized in that** said third lip (31) cooperates with said second mating portion (10) in correspondence with a radial projection (32) thereof.

6. Seal assembly according to any of the previous claims, **characterized in that** said sealing means consist of a single element (9).

## Patentansprüche

1. Dichtanordnung (1), um den Spalt (2) zwischen einem drehenden Element (4) und einem befestigten Element (3), das das drehende Element (4) aufnimmt, abzudichten, um den Fluss von Öl von einer ersten Umgebung (5) zu einer zweiten Umgebung (6) zu verhindern, die auf entgegengesetzten Seiten des Spalts (2) angeordnet sind, während die Dichtanordnung (1) umfasst:
einen ersten Ring (7), der an das drehende Element (4) anpassbar ist,
einen zweiten Ring (8), der an das befestigte Element (3) anpassbar ist,
elastisch deformierbare Dichtmittel (9), die an dem zweiten Ring (8) angeordnet sind und mindestens eine erste Lippe (21) umfassen, die geeignet ist, um in einer fluiddichten Weise mit einem ersten zusammenpassenden Bereich (11) des ersten Rings (7) zusammenzuarbeiten, sowie
eine Rille (30), die in dem Bereich der Zusammenarbeit zwischen der ersten Lippe (21) und dem ersten zusammenpassenden Bereich (11) bereitgestellt ist, um während der Drehung des drehenden Elements (4) einen fluiddynamischen Pumpeffekt zu erzeugen, der Öl weg von dem abdichtenden Bereich in Richtung der ersten Umgebung (5) drückt, wobei der fluiddynamische Effekt erzielt wird durch Erzeugen eines Luftstroms von der zweiten Umgebung (6) zu der ersten Umgebung (5) mittels der Rille (30) sowie durch die Drehung des drehenden Elements (4),
während die Dichtmittel (9) eine zweite Lippe (33) aufweisen, um den Luftstrom in allen Zuständen zu erlauben, wobei sie ebenso einen Filter für jegliche Fremdpartikel definiert, **dadurch gekennzeichnet, dass** die Rille (30) ein Spiralrille ist, in der die zweite Lippe (33) mit dem ersten Ring (7) eine Öffnung (34) einer vorbestimmten Größe beschränkt, sowie **dadurch**, dass die Dichtmittel (9) eine dritte Lippe (31) umfassen, die axial zwischen der ersten und der zweiten Lippe (21, 33) angeordnet ist und geeignet ist, um mit einem zweiten zusammenpassenden Bereich (10) des ersten Rings (7) zusammenzuarbeiten, der axial zwischen dem ersten zusammenpassenden Bereich (11) und der zweiten Umgebung (6) angeordnet ist, während die dritte Lippe (31) in einer Konfiguration angeordnet ist, in der sie eine Kontaktöldichtung mit dem zweiten zusammenpassenden Bereich (10) ausbildet, wenn das drehende Element (4) angehalten wird, und sie kann von dem zweiten zusammenpassenden Bereich (10) entfernt werden aufgrund des fluiddynamischen Pumpeffekts, der durch die Rille (30) auf die Luft innerhalb der Rille (30) erzeugt wird, wenn das drehende Element (4) zum Drehen gebracht wird.

2. Dichtanordnung gemäß Anspruch 1, **dadurch gekennzeichnet, dass** der Bereich der Zusammenarbeit zwischen der ersten Lippe (21) und dem ersten zusammenpassenden Bereich (11) sich radial in Bezug auf die Drehachse (A) des drehenden Elements (4) erstreckt.

3. Dichtanordnung gemäß Anspruch 1 oder 2, **dadurch gekennzeichnet, dass** der Bereich der Zusammenarbeit zwischen der dritten Lippe (31) und dem zweiten zusammenpassenden Bereich (10) sich axial in Bezug auf die Drehachse (A) des drehenden Elements (4) erstreckt.

4. Dichtanordnung gemäß einem der vorhergehenden Ansprüche, **dadurch gekennzeichnet, dass** die dritte Lippe (31) eine kegelstumpfartige konische Form aufweist, die koaxial mit der Drehachse (A) des drehenden Elements (4) ist und im Querschnitt in Richtung der ersten Umgebung (5) sowie in Richtung des Bereichs der Zusammenarbeit mit dem zweiten zusammenpassenden Bereich (10) abnimmt.

5. Dichtanordnung gemäß Anspruch 4, **dadurch gekennzeichnet, dass** die dritte Lippe (31) mit dem zweiten zusammenpassenden Bereich (10) in Übereinstimmung mit einem radialen Vorsprung (32) davon zusammenarbeitet.

6. Dichtanordnung gemäß einem der vorhergehenden Ansprüche, **dadurch gekennzeichnet, dass** die Dichtmittel aus einem einzigen Element (9) bestehen.

## Revendications

1. Ensemble formant joint d'étanchéité (1) pour réaliser l'étanchéité de l'espace (2) situé entre un élément rotatif (4) et un élément fixe (3) logeant ledit élément rotatif (4), pour empêcher l'écoulement de l'huile d'un premier environnement (5) à un second environnement (6) agencé sur les côtés opposés dudit espace (2), ledit ensemble formant joint d'étanchéité (1) comprenant :
une première bague (7) pouvant être montée sur ledit élément rotatif (4) ;
une seconde bague (8) pouvant être montée sur ledit élément fixe (3) ;
des moyens d'étanchéité élastiquement déformables (9) fixés sur ladite seconde bague (8) et comprenant au moins une première lèvre (21) appropriée pour coopérer de manière étanche au fluide avec une première partie de couplage (11) de ladite première bague (7) ; et
une rainure (30) prévue dans la zone de coopération située entre ladite première lèvre (21) et ladite première partie de couplage (11) pour générer, pendant la rotation dudit élément rotatif (4), un effet de pompage par la dynamique des fluides qui pousse l'huile à distance de la zone d'étanchéité vers le premier environnement (5) ; ledit effet de dynamique des fluides étant obtenu en générant un écoulement d'air du second environnement (6) vers ledit premier environnement (5) au moyen de ladite rainure (30) et en raison de ladite rotation dudit élément rotatif (4) ;
dans lequel lesdits moyens d'étanchéité (9) comprennent une deuxième lèvre (33) pour permettre l'écoulement d'air dans toutes les conditions, tout en définissant également un filtre pour des particules étrangères ;
**caractérisé en ce que** ladite rainure (30) est une rainure en spirale, **en ce que** ladite deuxième lèvre (33) délimite, avec ladite première bague (7), une ouverture (34) d'une taille prédéterminée, et **en ce que** lesdits moyens d'étanchéité (9) comprennent une troisième lèvre (31) intercalée de manière axiale entre lesdites première et deuxième lèvres (21, 33) et appropriée pour coopérer avec une seconde partie de couplage (10) de ladite première bague (7), intercalée de manière axiale entre ladite première partie de couplage (11) et ledit second environnement (6) ; ladite troisième lèvre (31) étant disposée dans une configuration dans laquelle elle forme un joint d'étanchéité d'huile de contact avec ladite seconde partie de couplage (10) lorsque ledit élément rotatif (4) est arrêté, et peut être détachée de ladite seconde partie de couplage (10) en raison de l'effet de pompage par la dynamique des fluides généré par la rainure (30) sur l'air à l'intérieur de ladite cavité (30) lorsque l'on fait tourner ledit élément rotatif (4).

2. Ensemble formant joint d'étanchéité selon la revendication 1, **caractérisé en ce que** la zone de coopération entre la première lèvre (21) et ladite première partie de couplage (11) s'étend de manière radiale par rapport à l'axe (A) de rotation dudit élément rotatif (4).

3. Ensemble formant joint d'étanchéité selon la revendication 1 ou 2, **caractérisé en ce que** la zone de coopération entre ladite troisième lèvre (31) et ladite seconde partie de couplage (10) s'étend de manière axiale par rapport à l'axe (A) de rotation dudit élément rotatif (4).

4. Ensemble formant joint d'étanchéité selon l'une quelconque des revendications précédentes, **caractérisé en ce que** ladite troisième lèvre (31) a une forme tronconique coaxiale par rapport à l'axe (A) de rotation dudit élément rotatif (4) et diminue du point de vue de la section vers ledit premier environnement (5) et vers la zone de coopération avec ladite seconde partie de couplage (10).

5. Ensemble formant joint d'étanchéité selon la revendication 4, **caractérisé en ce que** ladite troisième lèvre (31) coopère avec ladite seconde partie de couplage (10) en correspondance avec une saillie radiale (32) de celle-ci.

6. Ensemble formant joint d'étanchéité selon l'une quelconque des revendications précédentes, **caractérisé en ce que** lesdits moyens d'étanchéité se composent d'un seul élément (9).
